# EUROPÄISCHE PATENTSCHRIFT

(11) **EP 2 229 626 B1**
(45) Veröffentlichungstag und Bekanntmachung des Hinweises auf die Patenterteilung: **19.10.2011**
(21) Anmeldenummer: 08861872.3
(22) Anmeldetag: 15.12.2008
(51) Int. Cl.: G06F 9/445

(54) **ELEKTRONISCHE DIGITALE VORRICHTUNG**
ELECTRONIC DIGITAL DEVICE
DISPOSITIF NUMÉRIQUE ÉLECTRONIQUE

(30) Priorität: 14.12.2007 DE 102007060234
(43) Veröffentlichungstag der Anmeldung: 22.09.2010
(73) Patentinhaber: Sennheiser electronic GmbH & Co. KG, 30900 Wedemark (DE)
(72) Erfinder: FREY, Tom-Fabian, 38104 Braunschweig (DE); WATERMANN, Jan, 30163 Hannover (DE)
(74) Vertreter: Gültzow, Marc
(86) Internationale Anmeldenummer: PCT/EP2008/010646
(87) Internationale Veröffentlichungsnummer: WO 2009/077149

(56) Entgegenhaltungen:
- EP-A- 0 939 367
- JP-A- 2007 148 604
- US-A- 6 079 016
- CHAMPAIGNE K D ED - LE PERA A ET AL: "Low-power Electronics for Distributed Impact Detection and Piezoelectric Sensor Applications" AEROSPACE CONFERENCE, 2007 IEEE, IEEE, PISCATAWAY, NJ, USA, 3. März 2007 (2007-03-03), Seiten 1-8, XP031214375 ISBN: 978-1-4244-0524-4
- TSANG P K F ET AL: "An innovative approach for rms and thd control by field programmable gate arrays" POWER ELECTRONICS AND DRIVE SYSTEMS, 2003. PEDS 2003. THE FIFTH INTERN ATIONAL CONFERENCE ON SINGAPORE 17-20 NOV. 2003, PISCATAWAY, NJ, USA,IEEE, PISCATAWAY, NJ, USA, Bd. 1, 17. November 2003 (2003-11-17), Seiten 830-832, XP010695351 ISBN: 978-0-7803-7885-8

## Beschreibung

Die vorliegende Erfindung betrifft eine elektronische digitale Vorrichtung, welche einen FPGA (Field Programmable Gate Array) aufweist.

Ein FPGA (Field Programmable Gate Array; vor Ort modifizierbarer Logikbaustein) stellt einen programmierbaren integrierten Schaltkreis dar. In einem FPGA können durch spezifische Konfigurationen interner Strukturen verschiedene Schaltungen gebildet werden. Der FPGA weist programmierbare logische Komponenten auf.

Wenn ein Software-Update eines FPGA-basierten Systems durchgeführt wird, kann es vorkommen, dass die aktualisierte Software einen Fehler aufweist, so dass ein Booten bzw. Hochfahren des FPGA-basierten Systems nicht mehr möglich ist. In derartigen Fällen kann es erforderlich sein, zumindest einen Teil der Elektronikbausteine auszuwechseln. Um dies zu vermeiden, kann ein Controller in dem FPGA-basierten System vorgesehen werden, welcher dazu dienen kann, das Software-Update zu steuern.

Als allgemeiner Stand der Technik sei auf die US 6,079,016 und die EP 0 939 367 A2 verwiesen.

Es ist eine Aufgabe der vorliegenden Erfindung, eine elektronische Vorrichtung mit einem FPGA vorzusehen, welcher ein Softwareupdate ermöglicht und kostengünstiger herzustellen ist.

Diese Aufgabe wird durch eine elektronische Vorrichtung gemäß Anspruch 1 gelöst.

Somit wird eine elektronische Vorrichtung mit einer FPGA Einheit, einem ersten und zweiten Speicher zum Speichern von Boot-Daten für die FPGA Einheit und einem digitalen Potentiometer zum Speichern einer erster und zweiten Einstellung vorgesehen. In der ersten Einstellung des Potentiometers ist der erste Speicher (zum Booten) mit der FPGA Einheit gekoppelt und in der zweiten Einstellung des Potentiometers ist der zweite Speicher zum Booten mit der FPGA Einheit gekoppelt.

Gemäß einem Aspekt der vorliegenden Erfindung weisen die FPGA Einheit und das digitale Potentiometer jeweils eine integrierte serielle Schnittstelle auf.

Gemäß einem weiteren Aspekt der vorliegenden Erfindung ist das digitale Potentiometer dazu geeignet, in einer Testbetriebsart die zum Booten der FPGA Einheit benötigten Signale an den zweiten Speicher weiter zu leiten, so dass die FPGA Einheit aus dem zweiten Speicher gebootet werden kann.

Die vorliegende Erfindung betrifft ebenfalls ein digitales Mikrofon mit einer oben beschriebenen elektronischen Vorrichtung.

Die Erfindung betrifft ebenfalls ein Verfahren zum Steuern einer elektronischen Vorrichtung mit einer FPGA (Field Programmable Gate Array) Einheit, einem ersten und zweiten Speicher und einem digitalen Potentiometer. Der erste und zweite Speicher wird zum Speichern von Boot-Daten der FPGA Einheit verwendet. Das digitale Potentiometer wird zum Speichern einer ersten und zweiten Einstellung verwendet. In der ersten Einstellung des digitalen Potentiometers wird der erste Speicher mit der FPGA Einheit gekoppelt und in der zweiten Einstellung des digitalen Potentiometers wird der zweite Speicher zum Booten mit der FPGA Einheit gekoppelt.

Die Erfindung betrifft den Gedanken, ein Update der Betriebssoftware in zwei verschiedenen Bootsektoren der elektronischen digitalen Vorrichtung zu ermöglichen, so dass die Vorrichtung aus zwei verschiedenen Speichern booten kann. Dazu kann ein FPGA vorgesehen werden, welcher ein selbsttätiges Booten beispielsweise aus einem seriellen Flashspeicher ermöglicht. Ferner werden zumindest zwei verschiedene Bootsektoren in dem oder den Speicher(n) vorgesehen. Üblicherweise erzeugt das FPGA SPI-Bus Signale wie beispielsweise CS\, MOSI, MISO, SCLK zum Auslesen der seriellen Flash PROM. Indem die Chip-Select Signale CS umgeleitet werden, können verschiedene Boot PROMs angesprochen werden.

Das Umleiten der Chip-Select Signale kann beispielsweise mittels eines programmierbaren (digitalen) Potentiometers erfolgen. Die Schleiferposition des programmierbaren Potentiometers kann sowohl temporär bzw. volatile als auch permanent bzw. non-volatile gesetzt werden. Das digitale programmierbare Potentiometer weist vorzugsweise eine SPI-Schnittstelle auf. Weitere Ausgestaltungen der Erfindung sind Gegenstand der Unteransprüche.

Gemäß der Erfindung wird das elektronische Potentiometer als Umschalter (zwischen zwei Speichern) für eine Booteinstellung eines FGPA verwendet. Durch die permanente Speicherung der Schleiferposition im Potentiometer kann der stromlose Zustand überbrückt werden.

Vorteile und Ausführungsbeispiele der Erfindung werden nachstehend unter Bezugnahme auf die Zeichnung näher erläutert.

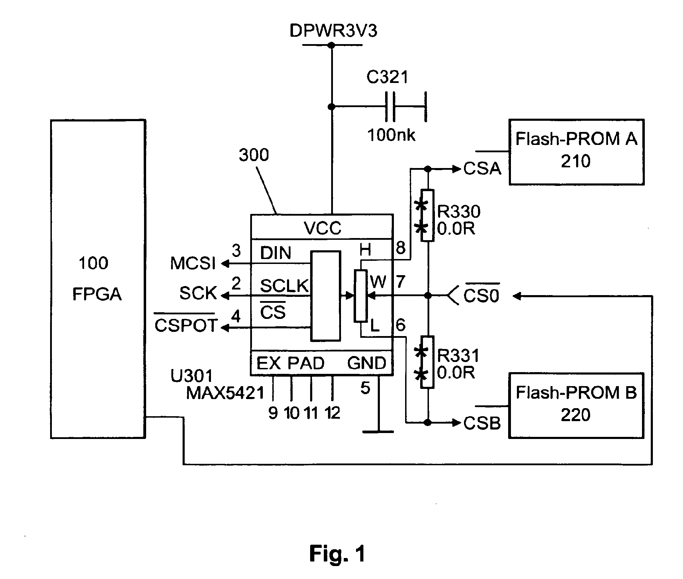

- Fig. 1: zeigt eine schematische Darstellung einer elektronischen Digitalvorrichtung gemäß einem ersten Ausführungsbeispiel

Fig. 1 zeigt eine schematische Darstellung einer elektronischen (Digital) Vorrichtung gemäß einem ersten Ausführungsbeispiel. Die elektronische Vorrichtung weist einen Field Programmable Gate Array FPGA Baustein 100, einen ersten Speicher 210 und einen zweiten Speicher 220 sowie ein digitales (programmierbares) Potentiometer 300 auf. Ein digitales (programmierbares) Potentiometer stellt eine digital steuerbare elektronische Komponente dar, welche die analogen Funktionen eines Potentiometers nachbilden kann. Mit dem digitalen Potentiometer kann ein nicht flüchtiges Umschalten ermöglicht werden. Der erste und zweite Speicher 210, 220 kann jeweils als ein Flash PROM ausgestaltet sein. Das digitale Potentiometer 300 kann dazu ausgestaltet sein, zumindest zwei Zustände zu speichern. In dem ersten Zustand des Potentiometers 300 wird der erste Speicher 210 mit dem FPGA 100 Baustein gekoppelt und in dem zweiten Zustand des digitalen Potentiometers 300 wird der zweite Speicher 220 mit dem FPGA Baustein 100 gekoppelt. Der erste und zweite Speicher 210, 220 kann jeweils zum Speichern der für den Boot-Vorgang des FPGA 100 benötigten Daten verwendet werden. Mittels des digitalen Potentiometers 300 können beispielsweise die Chip-Select Signale des FPGA zu dem ersten oder zweiten Speicher 210, 220 umgeleitet werden. Das digitale Potentiometer 300 weist vorzugsweise eine Serial Peripheral Interface SPI-Schnittstelle auf.

Der FPGA 100 Baustein kann über eine (nicht gezeigte) Schnittstelle Konfigurationsdaten oder Aktualisierungsdaten empfangen und in dem ersten und/oder zweiten Speicher 210, 220 speichern. Diese Daten können Daten enthalten, welche beispielsweise zum Booten des FPGA 100 benötigt werden. Nachdem die Daten in dem ersten und/oder zweiten Speicher 210, 220 gespeichert sind, kann der FPGA 100 Baustein aus einem der beiden Speicher 210, 220 gebootet werden. In einer Test-Boot-Betriebsart wird das Chip-Select Signal CS/ zumindest temporär umgeleitet. Nachdem ein erfolgreicher Boot-up Vorgang (z. B. indem die für den Boot-up Vorgang benötigten Daten aus dem ersten oder zweiten Speicher 210, 220 gelesen worden sind) erfasst worden ist, kann ein permanentes Umsetzen des digitalen Potentiometers 310 erfolgen, so dass der erste oder zweite Speicher permanent mit dem FPGA 100 gekoppelt ist. Insbesondere können somit die übertragenen Konfigurations- bzw. Aktualisierungsdaten getestet werden. Falls der Bootvorgang erfolgreich war, dann wurden die Konfigurations- bzw. Aktualisierungsdaten fehlerfrei übertragen und in einem der beiden Speicher 210, 220 gespeichert.

Der gemäß dem ersten Ausführungsbeispiel beschriebene FPGA 100 Baustein, der erste und zweite Speicher 210, 220 und das digitale Potentiometer 300 können beispielsweise in einem digitalen Mikrofon implementiert werden.

Das Mikrofon kann eine Betriebsart Softwareupdate aufweisen, welches es ermöglicht, die Software für das digitale Mikrofon zu aktualisieren. Dazu sollte die Lösung einen geringen Platzverbrauch auf der Leiterplatine, einen geringen Energieverbrauch und eine betriebssichere Lösung aufweisen. Vorzugsweise sollte die Lösung ohne einen zusätzlichen Controller auskommen. Gemäß der Erfindung ist es möglich, zwei verschiedene Speicher 210, 220 zu booten. Wenn die in einem der Speicher gespeicherten Daten fehlerhaft sind und ein Booten nicht mehr möglich ist, dann kann durch das digitale Potentiometer 300 zu dem anderen Speicher umgeschaltet werden.

## Patentansprüche

1. Elektronische Vorrichtung, mit
einer FPGA Einheit (100),
einem ersten und zweiten Speicher (210, 220) zum Speichern von Bootdaten für die FPGA Einheit (100), und
einem digitalen Potentiometer (300) zum Speichern einer ersten und zweiten Einstellung,
wobei in der ersten Einstellung des digitalen Potentiometers (300) der erste Speicher (210) mit der FPGA Einheit (100) gekoppelt ist und wobei in der zweiten Einstellung des digitalen Potentiometers (300) der zweite Speicher (220) mit der FPGA Einheit (100) gekoppelt ist.

2. Vorrichtung nach Anspruch 1, wobei
die FPGA Einheit (100) und das digitale Potentiometer (300) jeweils über eine integrierte serielle Schnittstelle (SPI) verfügen.

3. Vorrichtung nach Anspruch 1 oder 2, wobei das digitale Potentiometer (300) dazu geeignet ist, in einer Testbetriebsart die zum Booten der FPGA Einheit (100) benötigten Signale an den zweiten Speicher (220) weiterzuleiten, so dass die FPGA Einheit aus dem zweiten Speicher (220) gebootet wird.

4. Digitales Mikrofon mit einer elektronischen Vorrichtung nach einem der Ansprüche 1 bis 3.

5. Verfahren zum Steuern einer elektronischen Vorrichtung, welche eine FPGA Einheit (100) aufweist, mit den Schritten:
Speichern von Boot-Daten für die FPGA Einheit in einem ersten und/oder zweiten Speicher (210, 220),
Speichern einer ersten und zweiten Einstellung in einem digitalen Potentiometer (300),
Koppeln des ersten Speichers (210) mit der FPGA Einheit (100) in der ersten Einstellung des digitalen Potentiometers (300) und
Koppeln des zweiten Speichers (220) mit der FPGA Einheit (100) zum Booten der FPGA Einheit (100) in der zweiten Einstellung des digitalen Potentiometers (300).

## Claims

1. An electronic device, comprising
an FPGA unit (100),
a first and a second memory (210, 220) for storing boot data for the FPGA unit (100), and
a digital potentiometer (300) for storing a first and a second setting,
wherein, in the first setting of the digital potentiometer (300), the first memory (210) is coupled to the FPGA unit (100) and wherein, in the second setting of the digital potentiometer (300), the second memory (220) is coupled to the FPGA unit (100).

2. A device according to claim 1, wherein
the FPGA unit (100) and the digital potentiometer (300) each have a respective integrated serial interface (SPI).

3. A device according to claim 1 or 2, wherein the digital potentiometer (300) is suitable for passing, in a test mode, the signals required for booting the FPGA unit (100) to the second memory (220), so that the FPGA unit is booted from the second memory (220).

4. A digital microphone having an electronic device according to any one of claims 1 to 3.

5. A method for controlling an electronic device that has an FPGA unit (100), comprising the steps of:
storing boot data for the FPGA unit in a first and/or a second memory (210, 220),
storing a first and a second setting in a digital potentiometer (300),
coupling the first memory (210) to the FPGA unit (100) in the first setting of the digital potentiometer (300), and
coupling the second memory (220) to the FPGA unit (100) for booting the FPGA unit (100) in the second setting of the digital potentiometer (300).

## Revendications

1. Dispositif électronique, comportant :
une unité FPGA (100),
une première et d'une deuxième mémoire (210, 220) permettant de stocker des données d'amorçage pour l'unité FPGA (100), et
un potentiomètre numérique (300) permettant de stocker un premier et un deuxième réglage,
**caractérisé en ce que**, avec le premier réglage du potentiomètre numérique (300), la première mémoire (210) est couplée à l'unité FPGA (100) et **en ce que**, avec le deuxième réglage du potentiomètre numérique (300), la deuxième mémoire (220) est couplée à l'unité FPGA (100).

2. Dispositif selon la revendication 1, **caractérisé en ce que** l'unité FPGA (100) et le potentiomètre numérique (300) disposent chacun d'une interface série intégrée (SPI).

3. Dispositif selon la revendication 1 ou 2, **caractérisé en ce que** le potentiomètre numérique (300) est apte à transférer à la deuxième mémoire (220), dans un mode opératoire de test, les signaux nécessaires à l'amorçage de l'unité FPGA (100) de sorte que l'unité FPGA soit amorcée à partir de la deuxième mémoire (220).

4. Microphone numérique doté d'un dispositif électronique selon l'une quelconque des revendications 1 à 3.

5. Procédé pour commander un dispositif électronique, qui comporte une unité FPGA (100), avec les étapes consistant à :
stocker des données d'amorçage pour l'unité FPGA dans une première et/ou une deuxième mémoire (210, 220),
stocker un premier et un deuxième réglage dans un potentiomètre numérique (300),
coupler la première mémoire (210) à l'unité FPGA (100) lorsque le premier réglage est appliqué au potentiomètre numérique (300) et
coupler la deuxième mémoire (220) à l'unité FPGA (100) pour amorcer l'unité FPGA (100) lorsque le deuxième réglage est appliquée au potentiomètre numérique (300).
